# EUROPÄISCHE PATENTANMELDUNG

(11) **EP 4 818 387 A1**
(43) Veröffentlichungstag der Anmeldung: **07.10.2026**
(21) Anmeldenummer: 25167505.4
(22) Anmeldetag: 31.03.2025
(51) Int. Cl.: D05B 93/02

(54) **VERFAHREN ZUR HERSTELLUNG EINER TEXTILEN BEWEHRUNG FÜR BETONBAUTEILE UND VORRICHTUNG ZUR AUSFÜHRUNG DES VERFAHRENS**

(71) Anmelder: Fiber Elements GmbH, 8700 Leoben (AT)
(72) Erfinder: Fiel, Wolfgang, 1060 Wien (AT); Metzler, Werner, 6890 Lustenau (AT); Ludescher, Rafael, 1060 Wien (AT)
(74) Vertreter: Riebling, Peter

(57) **Zusammenfassung**

Verfahren zur Herstellung einer textilen Bewehrung für Betonbauteile, wobei in einem ersten Verfahrensschritt ein flächiges Trägermaterial bereitgestellt wird, das in einem zweiten Verfahrensschritt mit Rovings (25) belegt wird, die in einem dritten Verfahrensschritt unter Verwendung eines Befestigungsfadens (47) mit einem textilen Knoten (40, 44) auf dem Trägermaterial (13) festgelegt werden,
wobei das Trägermaterial als offen-maschiges aus sich kreuzenden Gitterstäben (27) bestehendes Geogrid (13) ausgebildet ist und dass im dritten Verfahrensschritt die Rovings (25) mit einem Schlingknoten (40) des Befestigungsfadens (47) auf den Gitterkreuzungspunkten (26) des Geogrid (13) festgelegt werden.

## Beschreibung

Die Erfindung betrifft ein Verfahren und eine Vorrichtung zur Herstellung einer Bewehrung auf ein offen-maschiges Trägermaterial, das im Speziellen ein Trägermaterial aus Basalt-Geogrid verwendet.

Im besonderen Fall betrifft die Erfindung ein Trägermaterial aus Basalt mit darauf lastfallgerecht abgelegten Faserbündeln für die Bewehrung von Beton, ohne zur Hilfenahme von zusätzlichen Trägermaterialien.

In der EP3684985B1 (Lohnveredelung Fussenegger & Grabher GmbH; Prio. 20.09.2017 "Bewehrung") wird ein Verfahren zur Herstellung einer Bewehrung, umfassend eine Gitterstruktur aus Rovings gezeigt, wobei ein durchgehend flächiges Trägermaterial vorhanden ist, das mit einem Lösemittel im Anschluss auf das Aufbringen und Fixieren der Rovings aufgelöst wird. Die Verwendung eines derartigen Trägermaterials wird in der vorliegenden Erfindung vermieden.

Die Druckschrift offenbart ein flächiges, auflösbares Trägermaterial, wobei Rovings kreuzweise auf das Trägermaterial aufgelegt und dabei die Rovings selbst Kreuzungspunkte auf dem Trägermaterial bilden. Die Rovings werden mit einem textilen Befestigungsfaden in der Befestigungsart einer Sticktechnik untereinander in ihren Kreuzungspunkten fixiert, sodass der Befestigungsfaden zumindest zwei Rovings untereinander verknüpft. Das flächige Trägermaterial dient lediglich zur Abstandhaltung zwischen verschiedenen Ebenen der Rovings, um in dieser Weise einen räumlichen Armierungskorb herzustellen. Nach erfolgter Belegung des auflösbaren Trägermaterials mit den Längs-, Quer- und Steg-Rovings, die in ihren Kreuzungspunkten durch einen Faden fixiert sind, wird das Trägermaterial aufgelöst.

Das EP3684985B1 basiert auf folgendem Fertigungsprozess.
□ Das Trägermaterial ist ein durchgehend flächiges Material PVA
□ Es werden Rovings nur in X und Y Richtung abgelegt, nicht aber in räumlicher Anordnung
□ Es ist ein weiterer Fertigungsprozess (Nassverfahren) zur Auflösung des Trägermaterials erforderlich.
□ Im EP3684985B1 muss zu diesem Zweck das 2D Konstrukt mit Harz besprüht werden um die Kontur (Geometrie) halten zu können.

Damit können lediglich form-instabile Bewehrungsgitter hergestellt werden, was deren Einsatz, Brauchbarkeit und Lastübertragung einschränkt.

Dieses Verfahren hat neben den Nachteilen eines aufwendigen Herstellungsprozesses den weiteren Nachteil, dass eine Großstickmaschine mit einer Führung des Unterfadens in einem Schiffchen verwendet wird, was zu unverhältnismässig hohen Kosten der Vorrichtung führt.

In der EP637658B1 (Bay Mills Limited; Prio.: 08.07.1993 "Offenes Gittergewebe zur Verstärkung eines Mauersystems, Mauersegmentprodukt und dessen Herstellungsverfahren") wird ein Verfahren zur Herstellung eines beschichteten offenen Gittergewebes zur Verstärkung und zur Stoßfestmachung für Mauersysteme mit einer festen Oberflache und einer stuckähnlichen Schicht genannt, wobei das Gewebe Rovings beinhaltet, die mit einer ein Silan enthaltenden Schlichte direktgeschlichtet sind, wobei das Beschichten der Rovings des Gewebes mit einem Polymerkunstharz erfolgt. Das Kunstharz soll für das Gewebe ein offenes Gitter fixieren. Die Verwendung eines Polymerkunstharzes ist aus Umweltschutzgründen abzulehnen.

In der EP3114288B1 (Technische Universität Dresden; Prio.: 04.03.2014 "Bewehrungsgitter für den Betonbau") wird ein Bewehrungsgitter für den Betonbau mit Hochleistungsfilamentgarnen beschrieben, die in einer ersten Richtung angeordnet sind, sowie Fäden, die in wenigstens einer von der wenigstens ersten Richtung abweichenden zweiten Richtung zu einer zweiten Fadenlage angeordnet sind. Die beiden Fadenlagen sind über Kreuzungspunkte zu einem textilen Flächengebilde verbunden und weisen zumindest teilweise, eine umschließende Aufdickung mit einem verrippten, sägezahnartigen Oberflächenprofil zur Übertragung höherer Kräfte bzw. Spannungen in die Filamentgarne auf. Eine umschließende Aufdickung mit einem verrippten, sägezahnartigen Oberflächenprofil ist jedoch wegen des aufwendigen Herstellungsprozesses nachteilig.

In der DE102015100438B3 (Technische Universität Dresden; Anmeldetag 13.01.2015 "Herstellung von Fertigteilen aus Textilbeton") wird ein Verfahren zur Herstellung von Fertigteilen aus Textilbeton genannt, wobei ein von polymeren Bindemitteln freies Garn mittels einer Verlegeeinrichtung in einem Grundrahmen zu einem Spanngelege ausgebildet wird und dabei das Garn unter mechanischer Spannung zwischen einer am Grundrahmen angeordneten Garnhalteeinrichtungen verlegt wird, wobei das Garn unter Vorspannung um Umlenkbolzen des Spannrahmens geführt wird. Das aus dem Garn gebildete Spanngelege ist zweidimensional und die Verlegung des Garns erfolgt mit einem Verlegeroboter. Das verwendete Garn bildet einen Roving aus Hochleistungsfilamentgarnen. Dabei wurde erkannt, dass die Beschichtung für den inneren Verbund des Rovings (Verbund der einzelnen Filamente) und der äußere Verbund zur Betonmatrix entscheidend für die Qualität des mit dem Armierungsgitter bewehrten Betonbauteils ist.

Nachteilig ist allerdings die Verwendung eines Spannrahmens, in dem das Garn mit einem Verlegeroboter unter Vorspannung abgelegt wird.

Der Erfindung liegt deshalb die Aufgabe zugrunde, ein Verfahren und eine das Verfahren ausführende Vorrichtung der eingangs genannten Art, so weiterzubilden, dass ein aus dem EP3684985B1 bekannte textile Bewehrung wesentlich belastungsfähiger ausgebildet ist, sodass auf Abstand haltende, später zu entfernde Gitterstrukturen verzichtet werden kann und eine absolute Festigkeit der verlegten Rovings auf den Kreuzungspunkten des Geogrids gewährleistet ist.

Die Lösung der gestellten Aufgabe erfolgt durch die technische Lehre der unabhängigen Patentansprüche.

Im Unterschied zum Gegenstand der EP 3 684 985 B1 schlägt die Erfindung kein auflösbares Trägermaterial vor, das nach dessen Auflösung freistehende, miteinander über Befestigungsfäden verknüpfte räumlich Rovingstrukturen bildet. Die Erfindung sieht - im Gegensatz hierzu - von vorne herein die Befestigung der Rovingstränge an ein gitterartiges Geogrid mittels Verknotung von Befestigungsfäden in den Gitterkreuzungspunkten des Geogrids vor. Damit bleibt das Geogrid als formgebendes Element erhalten. Als Ergebnis dieses neuartigen Verfahrens werden eine präzise Formgebung, eine besonders feste Struktur und eine daraus folgende verzugsfreie Formgebung von derart hergestellten zwei- oder dreidimensionalen Bewehrungen erreicht.

Demnach sieht die Erfindung vor, dass das Trägermaterial als offen-maschiges aus sich kreuzenden Gitterstäben bestehendes Geogrid ausgebildet ist und dass im dritten Verfahrensschritt die Rovings mit einem Schlingknoten des Befestigungsfadens auf den Gitterkreuzungspunkten des Geogrid festgelegt werden.

Eine zur Ausführung des Verfahren bevorzugte Vorrichtung sieht eine Vorrichtung zur Herstellung einer textilen Bewehrung für Betonbauteile vor, wobei eine Legemaschine in mindestens zwei Raumachsen gesteuert über einem flächigen Trägermaterial angeordnet ist, das in einem mindestens in einer Raumebene bewegbar gesteuerten Spannrahmen befestigt ist, und aus Faserbündeln bestehende Rovings auf dem flächigen Trägermaterial mittels eines textilen Befestigungsfadens mit Befestigungsknoten festlegbar sind, wobei das Trägermaterial als offen-maschiges aus sich kreuzenden Gitterstäben bestehendes Geogrid ausgebildet ist und die Rovings mit einem Schlingknoten des Befestigungsfadens auf den Gitterkreuzungspunkten des Geogrid festgelegt werden.

Zur Erläuterung der erfindungsgemäßen Maßnahmen und die damit verbundenen Vorteile sind nachfolgend einige Definitionen aufgeführt, die das Verständnis der Erfindung erleichtern.

Unter einer Bewehrung bzw. Armierung wird die Verstärkung von Betonbauteilen durch das Einbringen von Materialien zur Erhöhung der Tragfähigkeit verstanden, wobei in der vorliegenden Erfindung keine fertigten profilierten Stäbe, sondern eine speziell hergestellte Bewehrung aus der Kombination von Faserbündeln, sog. Rovings und einem offen-maschigen Geogrid verstanden wird und derart neben der Erhöhung der Tragfähigkeit noch viele weitere Vorteile generiert werden.

Unter einem Geogrid zur Herstellung von textilfaserverstärken Beton-Bauteilen werden knotensteife bzw. knotenfeste Gitter von Rovings auf der Basis von Geokunststoffen bzw. Geotextilien verstanden. Statt des Begriffs "Geogrid" ist auch der Begriff "Geogitter" gebräuchlich. Es können dabei alkali- und korrosionsresistente Fasern aus Kunststoffen oder Biokunststoffen oder Naturfasern oder Glasfasern oder Kohlenstoff/Carbonfasern oder Aramid-Fasern oder insbesondere Basaltfasern verwendet werden bzw. aus nichtmetallischen Materialien zur Erzielung der bereits genannten Vorteile in der Verwendung zur Herstellung von Betonbauteilen. Das Bewehrungsgitter =Geogrid kann dabei als flächige Gitterstruktur oder als dreidimensionales Armierungsgitter ausgebildet sein.

Das Geogrid oder jedes andere Bewehrungsgitter aus jedem anderen Maschenmaterial wird in einem Spannrahmen in einer Ketten-Stich- oder Stick- bzw. Legemaschine gehalten. Das Faserbündel wird auf Basis einer Finite-Elemente-Berechnung auf lastfallgerechte Trajektorien ausgelegt und auf das Geogrid mit einem bewegbar angetriebenen Legekopf aufgebracht. Sobald der Legekopf einen solchen Rovingstrang auf einem Kreuzungspunkt des Bewehrungsgitters aufgelegt hat, erfolgt die Festlegung des Rovingstrangs auf diesem Kreuzungspunkt mit bevorzugt einem Schlingknoten eines Befestigungsfadens. Der Schlingknoten umschliesst den Kreuzungspunkt der Gitterstäbe des Bewehrungsgitters und legt dabei den Rovingstrang lagengesichert auf diesem Kreuzungspunkt des Bewehrungsgitters fest. Der zur Knotenbildung verwendete Befestigungsfaden wird von einem zwei- und/oder dreidimensional angetriebenen Stickwerkzeug zugeführt und mit dem hakenartigen Ende einer Sticknadel zu einem Schlingknoten umgeformt.

Die damit hergestellten faserverstärkten, lastfallgerechten Bewehrungsstrukturen, können sowohl als 2- oder 3-dimensionale Strukturen eingesetzt werden. Mit diesem Verfahren gefertigte Bewehrungen erhöhen nicht nur die Zugfestigkeit, sondern auch die Verbundfestigkeit im Beton. Das geringere Gewicht, die höhere Temperaturbeständigkeit, und die freie räumliche Gestaltung sind weitere Vorteile dieses Systems.

Der Begriff "Stickwerkzeug" meint, dass es sich nicht um Stickwerkzeug in einem handelsüblichen Stickkopf einer Großstickmaschine handelt, weil die üblicherweise verwendeten Sticknadeln von Großstickmaschinen den Stoffgrund durchdringen und auf der Rückseite eine Fadenschlaufe bilden, die von einem - in einem Schiffchen geführten - Unterfaden durchsetzt wird. Solche Sticknadeln sind in der Regel gerade ausgebildet und weisen kein Hakenende auf. Bei der Erfindung ist demnach keine, einen - nicht vorhandenen - Stoffgrund durchsetzende Sticknadel vorhanden. Eine solche Nadel nach der Erfindung hat eher den Charakter einer Häkelnadel mit einem hakenförmigen Kopf, der geeignet ist, von der Oberseite des Trägermaterials her einen Schlingknoten, bevorzugt einen Kettstich-Knoten um den auf dem Kreuzungspunkt des Gitters liegenden Roving anzufertigen, was bei dem angewendeten Verfahren eher dem Charakter eines Häkelns entspricht. Im Gegensatz zu einer Sticknadel oder einer Stricknadel hat eine Häkelnadel einen hakenförmig abgebogenen Kopf, der zur Einholung einer Fadenschlaufe eines Befestigungsfadens geeignet ist. Unter Berücksichtigung dieser Unterschiede wird in der folgenden Beschreibung gleichwohl der Begriff "Sticknadel" verwendet.

Mit Hilfe dieses Hakens ist es möglich, den Befestigungsfaden durch bereits gearbeitete Maschen zu ziehen und damit ein zusammenhängendes Maschengebilde - im vorliegenden Fall einen Schlingknoten - zu erzeugen.

Faserbündel (Rovings) aus den genannten Materialien bestehen aus sog. Filamenten mit einem Durchmesser von 6 bis über 50 Mikrometern. Ein typisches Bündel besteht aus einigen 6.000 bis 96.000 Filamenten (Carbon) bzw. weist 150 bis über 4800 tex (g/km) (Basalt) auf, und wird in Form von Spulen mit einem typischen Gewicht von 30 kg und einer beispielhaften Länge von über 12 km verarbeitet. Die verwendeten Filamente weisen i.a. eine Grundschlichte aus wässrigem Harz auf.

Unter einem Spannrahmen für Geogrids werden Rahmen verstanden, die ein Geogrid oder ein anderes Maschenmaterial an den Rändern mechanisch fixieren und derart von oben und unten frei zugänglich sind und straff gespannt werden können.

Unter einer erfindungsgemäßen Legemaschine wird eine NC-gesteuerte Anlage verstanden, deren Legekopf präzise, ein automatisiertes Ablegen der Rovings auf einem offen-maschigen Trägermaterial (Geogrid) ausführt, das in entsprechenden Spannrahmen straff gehalten wird. Während des Legevorganges der Rovings erfolgt eine Befestigung der Roving-Faserbündel an den jeweiligen Kreuzungspunkten des Geogrids mittels eines Befestigungsfadens, der aus einem Stickwerkzeug entstammt. Der Stickkopf des Stickwerkzeugs mit dem darin enthaltenen Befestigungsfaden wird bevorzugt nur von oben punktgesteuert auf die Gitterstruktur des Geogrids geführt. Es bedarf daher keiner Schiffchenführung mit einem darin enthaltenen Unterfaden, wie es bei Großstickmaschinen üblich ist. Damit werden erfindungsgemäß nur die wesentlichen Teile einer Großstickmaschine für die Ausführung des Verfahrens verwendet, was zu einer wesentlichen Herabsetzung der Gesamtkosten, der Fertigungszeit und der Wartung führt.

Somit können die Rovings über einen Legekopf lastfallgerecht, z.T. in der Luft, formstabil auf das Trägermaterial (Geogrid) aufgebracht und mit einem einseitig angebrachten Schlingknoten - bevorzugt einem Kettstichknoten oder einem anderen einseitig anbringbaren Knoten auf dem Trägermaterial fixiert werden.

Unter dem Begriff "Kettenstich-Sticken/Legen in Luft" wird das Sticken ohne Zuhilfenahme von zusätzlichem Trägermaterial verstanden. Die Steuerrichtung des Spannrahmens erzeugt entsprechend vorgegebene, errechnete, lastfallgerechte Pfade und/oder Geometrien zwischen den Kreuzungspunkten des Trägermaterials und den darauf abgelegten Rovings. Mittels Computer kann durch optoelektronische Positionier- bzw. Kalibrier- bzw. Optimier-Methoden die Präzision erhöht und allenfalls auf geometrische Abweichungen der verwendeten Geogrids reagiert und allfällige Toleranzen ausgeglichen werden.

Eine erfindungsgemäße Kettenstich-Stick.- bzw. Legemaschine weist einen typischen Legebereich von 2m x 1m auf und kann durch Anordnung mehrerer Einheiten nebeneinander auf mehrere Meter bis zu 8m x 2m Meter, das ist bis dato die größtmögliche zu fertigende Fläche, erweitert werden. Es werden entsprechende Spannrahmen zur Straffung des Grundmaterials, (Geogrid oder einem anderen offen-maschigem Trägermaterial) mit Halterungen für solche langen Gebilde benötigt.

Unter dem Begriff "Legen von Faserbündeln in Luft auf offen-maschiges Trägermaterial (Geogrid)" wird weiters verstanden, dass die (nackten) Faserbündel nach jedem einzelnen Stickvorgang zusätzlich, beispielhaft durch eine gezielte positionsgenaue Temperatureinwirkung, oder/und durch das Einbringen einer Druckkraft positionsgenau auf den Kreuzungspunkten des Trägermaterials abgelegt werden können. Mit der Einbringung einer Druckkraft auf den Knoten, kann das Garnmaterial des Befestigungsfadens im Knotenbereich mechanisch verfestigt werden. Alternativ oder gleichzeitig kann eine Temperaturerhöhung gezielt auf den Knotenbereich des Befestigungsfadens erzeugt werden, was bevorzugt durch einen geeigneten Laserstrahl erfolgt. Dabei kann der Laserstrahl auf den "nackten" Knoten gerichtet werden, um das Garnmaterial im Knotenbereich unterhalb der Schmelztemperatur zu erwärmen.

Alternativ kann die Temperatur und Einwirkzeit des Laserstrahls so weit erhöht werden, dass es zum teilweise Anschmelzen des Garnmaterials im Knotenbereich kommt.

Schließlich kann als weitere Alternative vorgesehen sein, dass das Befestigungsfaden von einem oder mehreren thermoplastisch aufschmelzbaren Thermoplastfäden begleitet ist, die in Längsrichtung des Stickgarnfadens den Außenumfang des Stickgarnfadens umgeben und beim Schuss mit einem auf den Knotenbereich gerichteten Laserstrahl aufschmelzen, wobei das geschmolzene Material in das Material des Knotens eindringt und dieses verfestigt.

Dabei dürfen die Fasern in ihren Eigenschaften nicht gemindert werden. Bevorzugt wird daher die Grundschlichte auf Basis von wässrigem Harz verwendet und derart gestaltet, dass eine Absorption im NIR-Bereich von handelsüblich erhältlichen NIR-LEDs bzw. Laser im Bereich von 700 bis 1.200 nm gegeben ist, um so eine Haftungserhöhung der Faserbündel an das Trägermaterial zu verbessern.

Aus den bevorzugten Merkmalen der Erfindung folgt:
1. Es ist- wie bei der EP 3 684 985 B1 - das Verlegen eines Spanngeleges nicht erforderlich. Somit bestehen freie Gestaltungsmöglichkeiten bei der Schaffung von mehrdimensionalen Strukturen. Dies senkt die Produktionszeit/Kosten, zumal ein industriell gefertigtes Spanngelege jeglicher Art (Geogrid), eingesetzt werden kann.
2. Das Ablegen von Spanngelegen nach der EP 3 684 985 B1 - direkt in die Schalungsstruktur hinein - blockiert unnötigerweise die Fertigungseinheiten der Betonage.
3. Demnach sieht die Erfindung als bevorzugtes Merkmal vor, dass das Faserbündel, welcher Art auch immer, lastfachgerecht, unter Rücksichtname der im Betonfertigteil erforderlichen Geometrie/en, auf das straff gespannte Trägermaterial (Geogrid) mittels Ketten-Stich- oder/und Häkelverfahren unter Verwendung eines knotenbildenden Befestigungsfadens aufgebracht wird.
4. Für das Befestigen des Rovings kann mit dem Kettenstich-Stickverfahren jegliches Material, ob auf Kunststoffbasis, thermisch verformbares Material oder Naturmaterial in den Stärken 12/2NM bis 200/2NM verwendet werden.
   Der Vorteil des Kettenstich-Stickverfahrens besteht darin, dass nur ein 1-Fadensystem genutzt wird, somit der Anteil von "Fremdmaterialien" im Fertigteil um 50 % gesenkt wird.
5. Weiters erfolgt durch diese Technik, die Verbindung zwischen dem Grid und dem abgelegten Faserbündel nur im Kreuzungsbereich derselbigen, somit ist keine Einschnürung des abgelegten Rovings in den offen-maschigen Abschnitten des Trägermaterials / Roving-Bereichen gegeben und wird zusätzlich verschiebungsgesichert verbunden.
6. Nach der Erfindung werden zunächst flächige Bewehrungsmatten hergestellt, die in einem nachfolgenden Biegeprozess zu dreidimensionalen Armierungskörben umgeformt werden. Somit kann der Biegeprozess an die Geometrie der Betonteile angepasst werden.
7. Bei zusätzlicher Bestrahlung des Knotenbereichs mit einem gepulsten Laser-System in Verbindung mit einem thermoplastischem Garn, das den Rovingstrang begleitet, wird der abgelegte Roving radiusgenau über den offenen Trägerdurchbrüchen des Gitters sowie auf den Kreuzungspunkten des Grid mit dem Roving auf Position gehalten und es wird - in mehreren erweiterten Ausführungsbeispielen - der dort gebildete Knoten durch eine mechanische Verfestigung und/oder Wärmebehandlung und/oder Aufschmelzen eines thermoplastischen Garns fixiert.

Aufgrund dieser absolut festen Knotenverbindung gelingt es erstmals, zweidimensionale Gebilde mechanisch in dreidimensionale Bewehrungskörper umzuformen, ohne dass es bei der Verformung zu unerwünschten Verschiebungen im Knotenbereich kommt. Dies ist ein bevorzugter Faktor, um beim Preform-Prozess von der 2D-Ebene in die 3D-Struktur zu kommen.

Der Durchmesser der Roving-Zuführung und die Bündelung des Rovings in radiusförmigen Verläufen ist über die Bewegungssteuerung des Legekopfs und/oder des Spannrahmens steuerbar. (Steigerung der Anbindung an den Beton).

Die Umschlingung des abgelegten Rovings mittels thermoplastischem Faden, der dann mittels getaktetem Laser an den Kreuzungspunkten (Grundträger / Roving) beidseitig des abgelegten Rovings verschmolzen wird und sofort aushärtet, wird in einem erweiterten Ausführungsbeispiel zur Steigerung der Festigkeit des Knotens verwendet. Dadurch wir ein Abgleiten von der errechneten Lageposition des Rovings in darauffolgenden Prozessen, z. B. Preforming von einer 2D-Struktur in eine 3D-Struktur, verhindert. Es können somit Rovings von 6 K bis 96 K oder 150 tex bis 4800 tex abgelegt werden.

In den Worten eines Stickerei-Fachmanns gesprochen, schlägt die Erfindung vor, als virtuellen Stickboden das Geogrid zu verwenden, das in einem Spannrahmen eingespannt ist. Der Spannrahmen kann in X-Y-Richtung verschiebbar angetrieben sein und auf der Vorderseite ist ein Stick- oder Häkelwerkzeug in einem über dem Spannrahmen verfahrbar angetriebenen X-Y-Schlitten angeordnet, dessen Stick- oder Häkelnadel - hier nur noch als "Sticknadel" bezeichnet - jeweils einen Gitterpunkt des Geogrids ansteuert.

Der Spannrahmen kann deshalb in X-Y-Richtung angetrieben sein.

Die Sticknadel steuert im Stillstand dem Legeradius entsprechend den nächstfolgenden Kreuzungspunkt auf dem Roving-Geogrid an.

Diese werden bereits am Legestartpunkt durch Steuersoftware mit Ermittlung der Kreuzungspunkte angefahren.

Auf dem Geogrid werden mit einem Verlegekopf strangförmige Rovings auf die Gitterpunkte des Geogrids in einer Bogenform abgelegt. Der Legekopf kann dabei mit dem Stickwerkzeug verbunden sein oder er weist einen eigenen X-Y-Antrieb auf.

Das Stickwerkzeug wird nun auf einen bestimmten Kreuzungspunkt des Geogrids bewegt, dort wo gerade ein Roving vom Verlegekopf abgelegt wurde.

Die Ablegerichtung des Rovings ergibt sich aus dem Fahrweg X/X - Y/Y des Spannrahmens.

Die Sticknadel führt nun bevorzugt einen aus zwei Schlingen bestehenden Kettstich-Knoten um den Roving herum aus, um diesen auf einem Kreuzungspunkt des Geogrids festzulegen. Danach wird der X-Y-Antrieb des Stickwerkzeugs (unter Einhaltung der erforderlichen Lastfall-Radien) um eine Maschenweite des Geogrids weiterbewegt und der gleiche Vorgang findet an der nächsten Knotenstelle statt. Der Stickfaden wird dabei stets und ununterbrochen mitgeführt.

Vorteil des erfindungsgemäßen Kettstichs ist, dass ein Schiffchen mit einem Unterfaden nicht erforderlich ist, sondern dass die gesamte Knotenbildung von oben her von einem Stickkopf mit einer Stick- oder Häkelnadel erfolgen kann.

Der Einfachheit halber wird dieses Werkzeug als "Sticknadel" bezeichnet, obwohl deren freies Ende einen aufwärts gerichteten Haken aufweist, der zur Verarbeitung und zur Anbringung des Kettstichs unter Verwendung des Befestigungsfadens geeignet ist. Ein solches Werkzeug könnte auch als Häkelnadel bezeichnet werden.

Die Erfindung ist daher nicht auf die Anbringung eines Kettstichs mit einem oberseitigen Stickwerkzeug beschränkt. Es können mit einem solchen oberseitigen Stickwerkzeug auch andere Stickarten verwendet werden, die geeignet sind, im Kreuzungspunkt von zwei sich kreuzenden Elementen einen faserförmigen Roving festzulegen. Es können also sämtliche Arten von Blind- und/oder Schlingstichen zur Bildung eines Schlingknotens verwendet werden, die nicht auf einen Unterfaden angewiesen sind.

Allerdings kann in einem anderen Ausführungsbeispiel am Stickkopf ein Unterwerkzeug in Form eines hakenförmigen oder keilförmiges Elements verwendet werden, welches zur Schlaufenbildung der Kettstich-Schlinge herangezogen werden kann, um dann mit der hakenförmigen Sticknadel die Kettstich-Schlingen anzubringen.

Vorteil der Kettstich-Schlingen ist demnach die besonders feste Verbindung von sich kreuzenden Elementen, nämlich von zwei gitterstabförmigen Geogrid-Stäben in Verbindung mit einem auf dem Kreuzungspunkt dieser Stäbe abgelegten Roving-Material, welches mit dieser Art der Schlingenbildung besonders fest und verschiebungsfrei festgelegt wird, weil der Schlingknoten durch eine entsprechende Bewegungsführung der Sticknadel festgezogen werden kann. Mit Hilfe dieses Hakens ist es möglich, den Faden durch bereits gearbeitete Schlaufen zu ziehen und damit ein zusammenhängendes Maschengebilde aus im Abstand voneinander angeordneten Schlingknoten zu erzeugen.

Die Anfertigung eines Schlingknotens in Form einer Luftmasche in der Häkeltechnik erfolgt dergestalt, das zunächst eine erste Luftmasche mit dem Hakenende der Sticknadel geformt wird, danach formt man das Garn zu einer Schlaufe und holt den zum Knäuel führenden Befestigungsfaden als neue Schlinge nach vorn. Eine neue Luftmasche entsteht, indem die Häkelnadel von unten hinter den Knäuelfaden geführt und aus der zuvor gebildeten Schlinge gezogen wird.

In einer bevorzugten Weiterbildung der Erfindung kann es vorgesehen sein, dass eine weitere Verfestigung des Schlingknotens erforderlich ist. Für diese Weiterbildung ist es vorgesehen, dass noch zusätzliche Verfestigungsmaßnahmen für die bereits mit dem Stickwerkzeug gebildeten Kettstichknoten erfolgen. Dabei wird es bevorzugt, wenn eine solche Knotenverfestigung durch ein thermoplastisches Material erfolgt, was bevorzugt in der Weise erfolgt, dass mit dem Roving eine Anzahl von thermoplastisch schmelzbaren Fäden mitgeführt wird, die den Roving vorteilhaft spiralförmig umschlingen oder parallel zu seiner Längsrichtung an seinem Außenumfang anliegen und ihn mindestens teilweise bedecken.

Wenn diese thermoplastischen Garnfäden zusammen mit dem Roving zur Verfestigung des Knotens verwendet werden, wird es bevorzugt, wenn nach der Bildung des Knotens ein Laserschuss auf den Knoten erfolgt, wodurch die thermoplastischen Garne schmelzen und das geschmolzene Material den Knoten durchdringt und auf diese Weise noch stärker verfestigen.

In einer anderen Ausgestaltung der vorliegenden Erfindung kann es vorgesehen sein, dass statt der Verwendung von wärmeschmelzbarem thermoplastischem Garn, welches den Roving begleitet, auch andere thermoplastische Schmelzverfahren verwendet werden. Ein solches alternatives thermoplastisches Schmelzverfahren kann zum Beispiel sein, dass im Bereich des gebildeten Kettstichknotens ein flüssiges aushärtbares Material aufgesprüht wird, welches z.B. in Luft aushärtet. Diese Material hat dann die Eigenschaft eines lufthärtenden Klebstoffs. Alternativ kann auch ein unter UV-Bestrahlung aushärtender Klebstoff verwendet werden. In einer anderen Weiterbildung kann das aufgesprühte Material mit einem Laserschuss zum Aufschmelzen auf dem Schlingknoten gebracht werden.

Alternativ gibt es die Möglichkeit, die Stick- oder Häkelnadel induktiv oder strahlungsgesteuert zu beheizen, um entweder eine Wärmebehandlung des "nackten" Schlingknotens oder eine Aufschmelzung des Schlingknotens mit einem thermoplastischen Material zu erreichen.

Mit der Anwendung einer geeigneten Maschinensteuerung kann der Legekopf in X-, Y- und Z-Richtung verschoben werden und das daran befestigte Stickwerkzeug kann damit jede beliebige Koordinate des darunterliegenden Geogrids ansteuern und insbesondere die Knotenpunkte der Gitterstäbe erkennen, weil es erforderlich ist, dass die Schlingknoten zur Befestigung der Rovingstränge nur an den Gitterkreuzungspunkten der Gitterstäbe angeordnet werden und nicht außerhalb. Kommt es zu einer außerhalb liegenden Verknüpfung, die nicht in den Gitterkreuzungspunkten angeordnet ist, wird damit die Festigkeit des Armierungskorbs beeinträchtigt, was verhindert werden sollte. Aus diesem Grunde ist die Maschine und die daraus gebildete Vorrichtung so ausgebildet, dass der Legekopf an einem X-Y-Z-Schlitten angeordnet ist, der an seiner Unterseite den Stickwerkzeugkopf trägt, der demzufolge in der Lage ist, jeden beliebigen Gitterkreuzungspunkt des darunterliegenden Geogrids anzusteuern.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Perspektivische Darstellung einer Ausführung einer Legemaschine zur Bestückung eines Geogrids mit Rovings und deren Festlegung auf den Gitterkreuzungspunkten des Geogrids.
- Figur 2:: Schematisiert die Darstellung einer Ebene des Geogrids.
- Figur 3:: Die vergrößerte perspektivische Darstellung des Legekopfs.
- Figur 4:: Die Darstellung der Anordnung des Legekopfs über dem Geogrid mit Darstellung der Verlegung der Roving-Stränge.
- Figur 5:: Eine schematische und abgeschnittene Darstellung eines Armierungskorbes, bei dem lediglich ein Teil der Seitenwand und ein Teil der senkrecht daran anschließenden Bodenwand gezeichnet ist mit daran angebundenen Rovingsträngen.
- Figur 6:: Eine schematisierte Darstellung der Verlegung der Rovingstränge auf den Gitterkreuzungspunkten des Geogrids mit Darstellung eines Fehlerfalls.
- Figur 7:: Eine bevorzugte Ausführungsform der Ausbildung einer Kettstich-Schlaufe zur Verbindung von Gitterstäben des Geogrid zusammen mit dem darauf liegenden Roving.

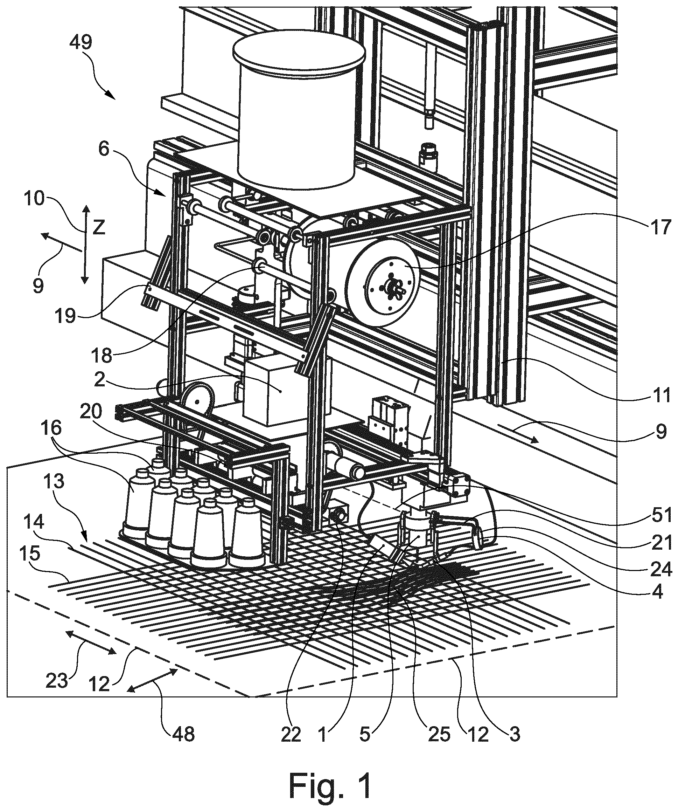

In Figur 1 ist eine perspektivische Ansicht einer Legemaschine 49 zur Herstellung zweidimensionaler Bewehrungsgitter dargestellt, wobei ein Schlittengestell 6 in Z-Richtung (Pfeilrichtung 10) verschiebbar an einem ortsfesten Maschinengestell 11 angeordnet ist und in X- und Y-Richtung (Pfeilrichtung 9) verschiebbar angetrieben ist.

Die gesamte Legemaschine 49 schwebt über einem gitterartigen Geogrid 13, welches aus einer oberen Ebene 14 und einer unteren Ebene 15 besteht, wobei das Geogrid aus einer Anzahl von sich vorzugsweise im rechten Winkel kreuzenden Gitterstäben 27 besteht, die unter sich jeweils Gitterkreuzungspunkte 26 ausbilden.

Das Geogrid 13 ist in einem Spannrahmen 12 befestigt, von dem nur die äußeren Umrisse durch Striche dargestellt sind. Der Spannrahmen ist bevorzugt in den Pfeilrichtungen 48 in einer horizontalen X-Y-Ebene verschiebbar angetrieben. Er könnte jedoch auch zusätzlich in einer zur Pfeilrichtung 48 senkrechten Richtung 23 angetrieben sein oder in beiden Richtungen 23, 48 angetrieben sein. Auf diese Weise ist es möglich, mit der Legemaschine 49 und deren Schlittenantrieb jeden beliebigen Gitterkreuzungspunkt 26 auf dem darunterliegenden Geogrid 13 anzusteuern und mit einem erfindungsgemäßen Schlingknoten 40 zu versehen.

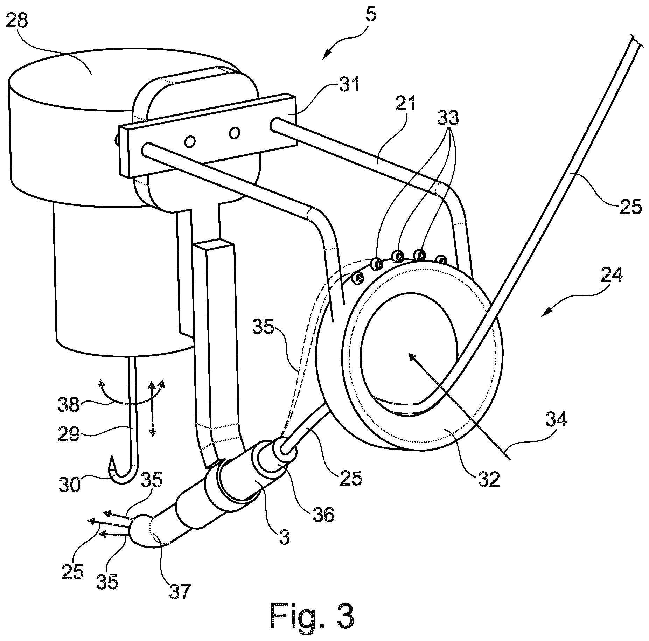

Die Legemaschine 49 besteht bevorzugt aus dem vorher genannten Schlittengestell 6, an dessen Oberseite eine Spule 17 zur Aufnahme der Basalt-Rovinge angeordnet sind, wobei die Basalt-Rovinge als mehrfädiger Strang über eine Tänzerwelle 18 in vertikaler Richtung nach unten abgespult werden und danach über eine Führungsschiene 19 in vertikaler Richtung (Pfeilrichtung 10) nach unten in einen Einzugsspalt einer drehend angetriebenen Abzugswalze 20 laufen, der eine Gegenwalze gegenüber liegt. Der aus der Spule 17 abgezogene Rovingstrang kommt gemäß der gestrichelten Linie in Figur 1 in der Zuführebene 51 in den Bereich des Legekopfes 5, wo er weiterverarbeitet wird. Die Zuführung der Rovings ist mit 24 bezeichnet. Die Einzelheiten des Legekopfes 5 sind in Figur 3 dargestellt.

Die Zuführung der Rovings jenseits der Abzugswalze 20 in der Zuführebene 51wird durch einen optischen Sensor 22 überwacht.

In Figur 1 ist noch dargestellt, dass die später zu verschmelzenden thermoplastischen Fäden auf am Schlittengestell 6 befestigten Garnspulen 16 aufgefädelt sind, die den Rovingstrang 25 begleiten und später durch Schuss aus einem Laserkopf 1 im Gitterkreuzungspunkt 26 mit dem gebildeten Schlingknoten 40 verschmolzen werden.

Es ist noch eine Laser-Power-Station 2 für die Energieversorgung des Lasers am Legekopf 1 vorgesehen und ferner eine Zuführung 3 für die Rovings am Legekopf 5, auf die noch näher eingegangen wird. Ebenso ist eine Führung 4 für das thermoplastische Garn vorhanden.

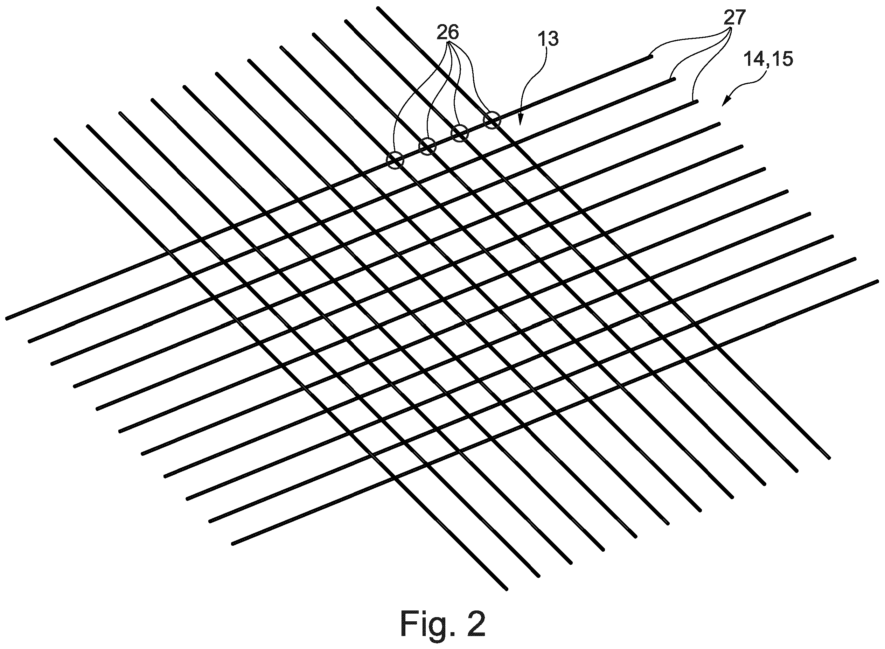

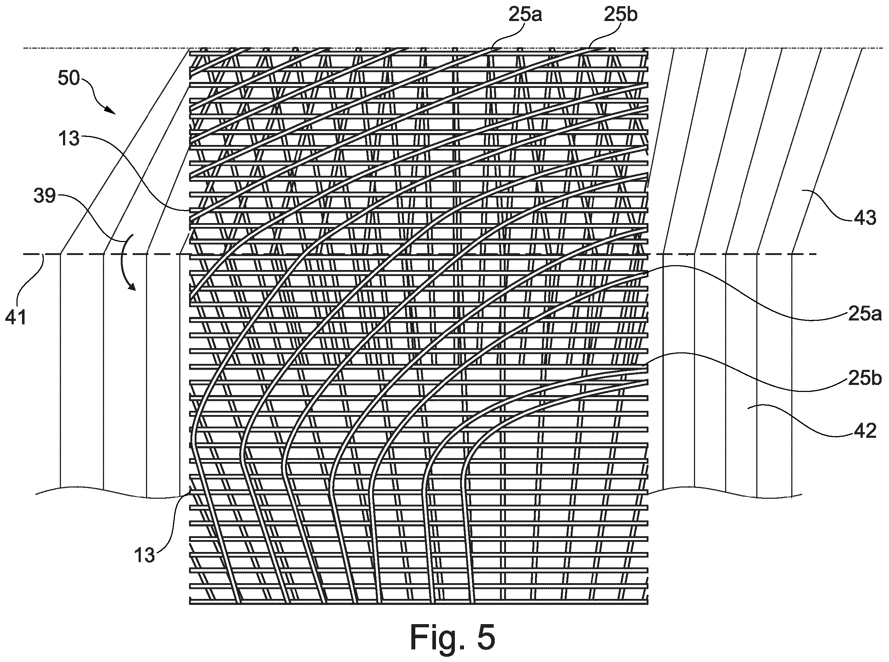

Figur 2 zeigt weitere Einzelheiten des Geogrids 13, wobei allerdings nur eine Ebene dargestellt ist, die nach einer späteren Umformprozess entweder eine obere Ebene 14 oder eine untere Ebene 15 eines Armierungskorbes 50 bilden. Es wird später noch dargestellt, dass aus einem solchen ebenen Konstrukt ein räumlicher Armierungskorb 50 hergestellt wird, wie dies in Figur 5 gezeigt ist.

Figur 2 zeigt, dass sich die Gitterstäbe 27 des Geogrids 13 in Gitterkreuzungspunkten 26 kreuzen, die später die Knotenstellen für den später darauf anzubringenden Schlingknoten 40 für die lagensichere Befestigung der Rovingstränge 25 bilden.

Figur 3 zeigt weiter Einzelheiten des Legekopfes 5. Dort ist erkennbar, dass der Stickwerkzeugkopf 28 mit einem nicht näher dargestellten Antrieb einen Sticknadel 29 in den eingezeichneten Pfeilrichtungen 38 (drehend und verschiebend) antreibt, wobei am äußeren Ende des Sticknadelschaftes ein Haken 30 für die Bildung des Schlingknotens 40 angeordnet ist.

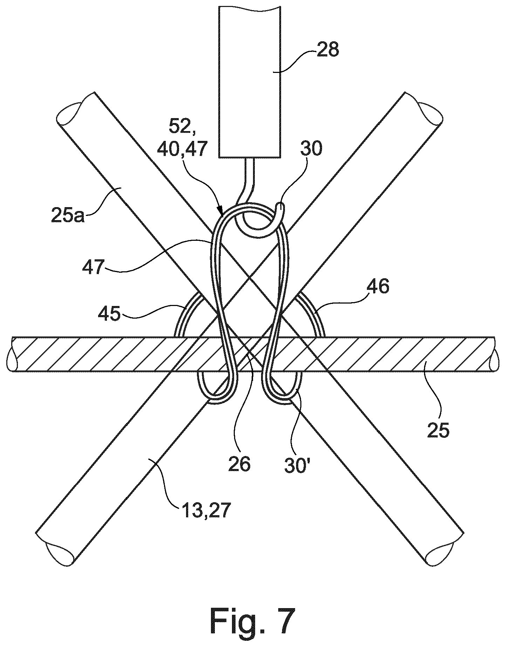

Es ist nicht dargestellt, dass dem Haken 30 und dem Stickwerkzeugkopf 28 ein Befestigungsfaden 47 zugeordnet ist, welches lediglich in Figur 7 dargestellt ist. Das Befestigungsfaden 47 wird von jedem Schlingknoten 40 zum folgenden Schlingknoten 40 ununterbrochen und ungeschnitten mitgeführt.

In Figur 3 ist gezeigt, dass die Zuführeinheit für die Rovingstränge am Legekopf 5 aus einer am Stickwerkzeugkopf 28 befestigten Halterung 21, 31 besteht, an deren vorderen freien Ende eine Führungsöse 32 größeren Durchmessers befestigt ist, die an ihrem Außenumfang mit einer Anzahl von Führungsösen 33 kleineren Durchmessers besetzt ist. Die kleineren Führungsösen 33 sind mit einem gleichmäßigen Abstand am äußeren Umfang der größeren Führungsöse 32 angeordnet. Es ist schematisiert dargestellt, dass ein auf einen Gitterkreuzungspunkt 26 abzulegender Roving 25 in Pfeilrichtung 34 durch die größere Führungsöse 32 hindurchgeführt wird und ihm als Begleitmaterial über die kleineren Führungsösen 33 das thermoschmelzbare Garn in Form von Thermoplastfäden 35 am Außenumfang zugeführt wird. Die Zuführung 3 der Rovings ist über eine weitere Halterung am Stickwerkzeugkopf 28 befestigt und wird mit diesem gesteuert bewegt.

Alternativ kann es vorgesehen sein, dass der Zuführung 3 für die Rovings ein vom Stickwerkzeugkopf 28 getrennter mehrdimensionaler Antrieb zugeordnet ist.

Im gezeigten bevorzugten Ausführungsbeispiel werden demnach die Thermoplastfäden 35 über eine getrennte Zuführung in einen Mischkopf 36 geführt. Der Mischkopf 36 vereinigt die Thermoplastfäden 35 mit dem Garnmaterial des Rovings 25 in der Zuführung 3, sodass beide Materialien den Legekopf 5 an der Auslassmündung 37 der Zuführung 3 unter gegenseitiger Berührung verlassen.

Somit gelangt das Mischmaterial, bestehend aus dem Roving 25 und den - den Roving 25 in Längsrichtung ummantelnden - Thermoplastfäden 35 in den Bereich der Sticknadel 29, 30 und wird dort gemäß Figur 7 als Schlingknoten 40 in der bevorzugten Ausbildung als Kettstich-Schlaufe 44 auf einem Gitterkreuzungspunkt 26 des Geogrids 13 festgelegt.

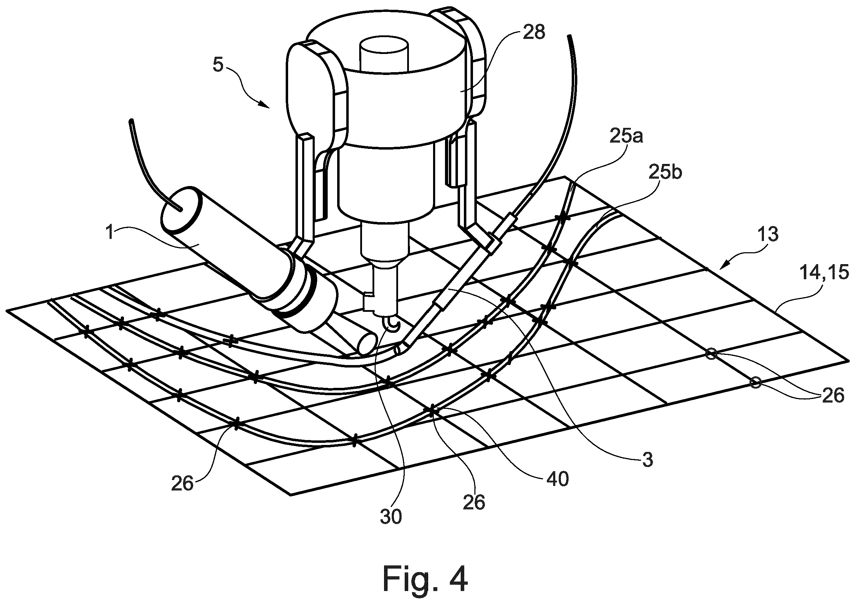

Die Figur 4 zeigt die Schwierigkeiten, die bei der Verlegung der Rovingstränge eintreten können, wobei der besseren Unterscheidung wegen zwei Rovingstränge 25a, 25b eng und parallel nebeneinander angeordnet sind, die vom Legekopf 5 in einem genau bestimmten Radius auf dem Geogrid 13 und dessen Gitterstäben 27 verlegt werden. Dabei wird es besonders bevorzugt, dass jeder Rovingstrang genau positionsgenau einen Gitterkreuzungspunkt 26 kreuzt und dort mit einer Kettstich-Schlaufe 44 mit dem Gitterstab 27 des Geogrid 13 verbunden wird.

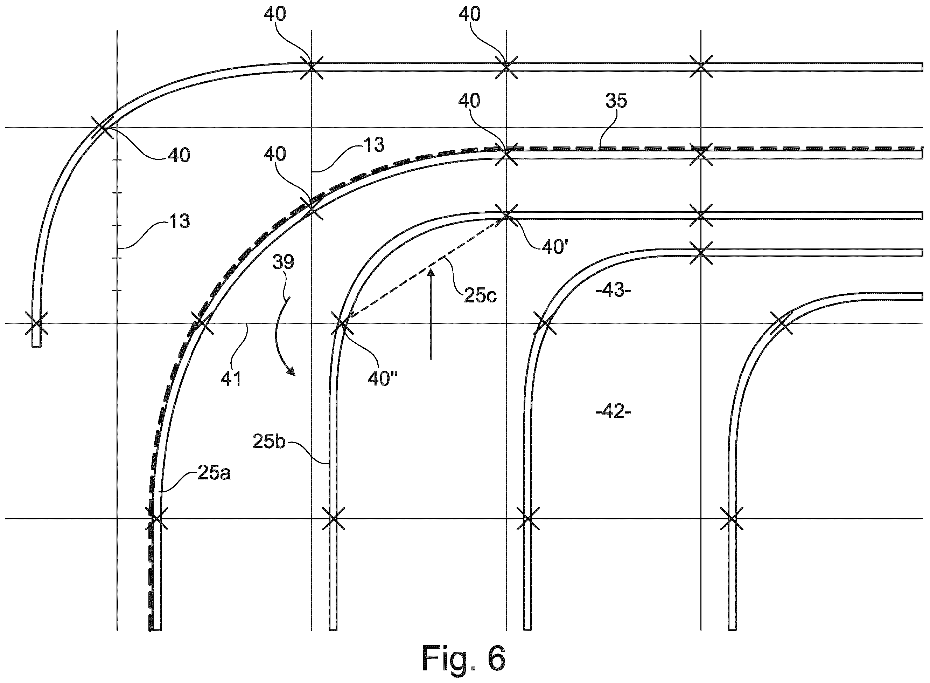

Versuche zeigten, dass bei der positionsgenauen Verlegung der Rovings 25 Schwierigkeiten entstanden, denn es kam - wie in Figur 6 gezeigt - zu Lagenversätzen oder zu Ungenauigkeiten, die mit den erfindungsgemäßen Maßnahmen vermieden werden konnten.

Es wird angestrebt, dass die Rovingstränge 25a, 25b positionsgenau und lagenrichtig auf den Gitterkreuzungspunkten 26 der Gitterstäbe 27 des Geogrids 13 abgelegt werden und dort mit einer Kettstich-Schlaufe 44 festgelegt werden. Nachdem aber der Rovingstrang erfindungsgemäß in einer ersten bevorzugten Ausgestaltung von einer Anzahl von Thermoplastfäden 35 mindestens teilweise ummantelt ist, können nun diese Thermoplastfäden 35 verwendet werden, um einen thermoplastisch aufgeschmolzenen Schlingknoten 40 zu bilden. Hierzu wird ein Laserkopf 1 verwendet, der mit seinem Strahl genau auf einen Gitterkreuzungspunkt 26 zielt und nach erfolgter Herstellung der Kettstich-Schlaufe 44 wird mit dem Laser kurzzeitig ein Schmelzstrahl auf die so hergestellte Kettstich-Schlaufe 44 abgegeben, die damit zu einem Schlingknoten 40 zerschmilzt, der von dem thermoplastisch geschmolzenen Material durchdrungen ist, sodass damit eine verschiebungsfreie, ortsfeste Festlegung des Schlingknotens 40 gewährleistet ist.

Auf diese Weise gelingt es erstmals einen Armierungskorb 50 herzustellen, bei dem eine unübertroffene Festigkeit und Verzugsfestigkeit sowie Formstabilität gewährleistet ist.

Ein solcher fertig bestückter Armierungskorb 50 ist teilweise im Ausschnitt in Figur 5 dargestellt. Hierbei ist auf der oberen Seite die Bodenwand 43 des Armierungskorbs 50 dargestellt, während eine Seitenwand 42 über eine Biegekante 41 im rechten Winkel abgewinkelt daran anschließt. Die Biegekante 41 wird dadurch erzielt, dass das vorher ebene Gitter 13, 27 in Pfeilrichtung 39 nach unten gefaltet wird, wodurch sich zwei im rechten Winkel zueinander stehende Ebenen 42, 43 ergeben. Aufgrund der absolut sicheren Verfestigung der aufgeschmolzenen Schlingknoten 40 kommt es nicht zu unerwünschten Verschiebungen zwischen dem Rovingstrang und dem Gitterkreuzungspunkt, sodass eine positionsgenaue Umformung des 2D-Gitters in einen 3D-Armierungskorb 50 möglich ist.

Die Figur 5 zeigt die lagenrichtige Zuordnung der Rovingstränge 25a, 25b auf den Gitterkreuzungspunkten 26 des Geogrids, und zwar auch dann, wenn aus dem ebenen Geogrid 13 durch Umklappen in Pfeilrichtung 39 ein räumliches Gebilde eines Armierungskorbs 50 geschaffen wird.

Die Figur 6 zeigt beim Umklappen der Ebene, zum Beispiel der Seitenwand 42 zu der Bodenwand 43, mögliche Fehlerfälle. Bei den Schlingknoten 40', 40" ist angegeben, dass es in solchen unerwünschten Fällen zu einer geraden Verbindung der Gitterkreuzungspunkte 26 kommen kann, das heißt, die Rovings sind nicht im geforderten Bogen geführt, sondern sind entsprechend der Linie 25c gerade geführt, was als Fehlerfall gewertet wird. Ein solcher Fehlerfall wird mit den technischen Maßnahmen der vorliegenden Erfindung auf jeden Fall vermieden, weil stets eine lagenrichtige Zuordnung des Legekopfes 5 zu den Gitterkreuzungspunkten 26 des Geogrids 13 gewährleistet ist.

Die Figur 7 zeigt die Bildung einer bevorzugten Ausführungsform, nämlich die Bildung einer Kettstich-Schlaufe 44, die den Vorteil hat, dass elastische Nähte hergestellt werden können, die aber im vorliegenden Fall den besonderen Vorzug hat, dass nur ein einseitiges, oberseitiges Stickwerkzeug verwendet werden muss, ohne dass ein Schiffchen-gesteuertes Unterwerkzeug vorhanden sein müsste.

Selbstverständlich gibt es auch andere Möglichkeiten der Anbringung einer Befestigungsschlaufe für die Ausbildung eines Schlingknotens 40, wobei sämtliche Blindstickknoten oder eine Maschenbildung im Häkelverfahren infrage kommen.

In Figur 7 ist nicht dargestellt, dass an der Unterseite des Stickwerkzeugkopfes 28 zur Schlaufenbildung ein Gegenwerkzeug verwendet werden kann, welches ebenfalls am Stickwerkzeugkopf 28 angeordnet ist.

Die hier gebildete Kettstich-Schlaufe 44 besteht aus zwei nebeneinander liegenden und parallel zueinander angeordneten Schlaufen 45, 46, die gemeinsam über eine Schlaufe 52 miteinander verbunden sind, sodass sich eine geschlossene Kettstich-Schlaufe 44 bildet, die vom Haken 30 des Sticknadelschaftes gebildet und festgezogen wird.

Somit wird der Roving 25 durch die beiden Schlaufen 45, 46 ortsfest und unverschiebbar auf dem Gitterkreuzungspunkt 26 festlegt. Dabei ist nicht dargestellt, dass auch der Roving durch Thermoplastfäden 35 begleitet werden könnte, um danach noch eine zusätzliche Verfestigung des so gebildeten Schlingknotens 40 durch Aufschmelzen der Thermoplastfäden 35 zu erreichen.

Darauf ist die Erfindung jedoch nicht beschränkt. Es kann in einer vereinfachten Ausführungsform vorgesehen sein, dass der Schlingknoten 40 ohne Verwendung von Thermoplastfäden 35 hergestellt wird.

In einer davon abgeleiteten Ausführungsform ist es jedoch vorgesehen, dass mit dem Roving Thermoplastfäden 35 in der vorher beschriebenen Weise mitgeführt werden, um dann von einem Laserkopf 1 aufgeschmolzen zu werden und einen noch besseren und in sich geschlossenen Schlingknoten 40 zu bilden.

Insgesamt wurde bei der Verschmelzung von Thermoplastfäden auf einem durch Kettstich-Schlaufen festgelegten Schlingknoten 40 festgestellt, dass damit ein Armierungskorb 50 geschaffen wird, der besonders verzugsfest und verformungsfrei ist und dabei hohe Lasten aufnehmen kann.

### Zeichnungslegende

- 1.: Laserkopf
- 2.: Laserpowerstation
- 3.: Zuführung (Roving)
- 4.: Führung (Thermoplast)
- 5.: Legekopf
- 6. 7. 8.: Schlittengestell
- 9.: X-Y-Richtung
- 10.: Z-Richtung
- 11.: Maschinengestell
- 12.: Spannrahmen
- 13.: Geogrid
- 14.: obere Ebene (von 13)
- 15.: untere Ebene (von 13)
- 16.: thermoplastische Garnspule
- 17.: Spule (Basaltroving)
- 18.: Tänzerwelle
- 19.: Führungsschiene (für Roving)
- 20.: Abzugswalze
- 21.: Zuführarm
- 22.: Sensor (Roving-Zuführung)
- 23.: Pfeilrichtung (Spannrahmen)
- 24.: Zuführung (Roving)
- 25.: Roving (abgelegt und befestigt)
25a. ""
25 b. ""
25 c ""
- 26.: Gitterkreuzungspunkt
- 27.: Gitterstab
- 28.: Stickwerkzeugkopf
- 29.: Sticknadel
- 30.: Haken
- 31.: Halterung
- 32.: Führungsöse (für 25)
- 33.: Führungsöse (für Thermoplast)
- 34.: Pfeilrichtung
- 35.: Thermoplastfaden
- 36.: Mischkopf
- 37.: Auslassmündung
- 38.: Pfeilrichtungen (von 29)
- 39.: Pfeilrichtung (von 50)
- 40.: Schlingknoten 40', 40"
- 41.: Biegekante
- 42.: Seitenwand
- 43.: Bodenwand
- 44.: Kettstich-Schlaufe
- 45.: Schlaufe
- 46.: Schlaufe
- 47.: Befestigungsfaden
- 48.: Pfeilrichtungen
- 49.: Legemaschine (Ketten-Stich-Stick- bzw. Legemaschine)
- 50.: Armierungskorb
- 51.: Zuführebene
- 52.: Schlaufe

## Patentansprüche

1. Verfahren zur Herstellung einer textilen Bewehrung für Betonbauteile, wobei in einem ersten Verfahrensschritt ein flächiges Trägermaterial bereitgestellt wird, das in einem zweiten Verfahrensschritt mit Rovings (25) belegt wird, die in einem dritten Verfahrensschritt unter Verwendung eines Befestigungsfadens (47) mit einem textilen Knoten (40, 44) auf dem Trägermaterial (13) festgelegt werden,
**dadurch gekennzeichnet, dass**
das Trägermaterial als offen-maschiges aus sich kreuzenden Gitterstäben (27) bestehendes Geogrid (13) ausgebildet ist und dass im dritten Verfahrensschritt die Rovings (25) mit einem Schlingknoten (40) des Befestigungsfadens (47) auf den Gitterkreuzungspunkten (26) des Geogrid (13) festgelegt werden.

2. Verfahren nach Anspruch 1, **dadurch gekennzeichnet, dass** das Geogrid (13) in einem mindestens in einer horizontalen Richtung bewegbar angetriebenen Spannrahmen (12) einer Kettenstich-Stick- bzw. Legemaschine (49) gehalten wird.

3. Verfahren nach Anspruch 1 oder 2, **dadurch gekennzeichnet, dass** die aus den Rovings (25) gebildeten Faserbündel lastfachgerecht auf das straff gespannte Geogrid (13) mittels Ketten-Stich-Stickverfahren gestickt werden.

4. Verfahren nach mindestens einem der Ansprüche 1 bis 3, **dadurch gekennzeichnet, dass** der Spannrahmen (12) mindestens in X-Y-Richtung (23, 48) bewegbar angetrieben ist.

5. Verfahren nach mindestens einem der Ansprüche 1 bis 4, **dadurch gekennzeichnet, dass** die Legemaschine (49) mindestens in Z-Richtung bewegbar über dem Spannrahmen (12) gesteuert angetrieben ist.

6. Verfahren nach mindestens einem der Ansprüche 1 bis 5, **dadurch gekennzeichnet, dass** der Schlingknoten (40) als Kettstich-Schlaufe (44) ausgebildet ist und mit dem hakenförmigen Ende einer in mindestens zwei Raumachsen bewegbar angetriebenen Sticknadel (29, 30) hergestellt wird.

7. Verfahren nach mindestens einem der Ansprüche 1 bis 6, **dadurch gekennzeichnet, dass** der fertig gestellte Schlingknoten (40) bei oder nach dessen Herstellung mechanisch und/oder thermisch verfestigt wird.

8. Verfahren nach Anspruch 7, **dadurch gekennzeichnet, dass** die Verfestigung des Schlingknotens (40) durch mechanischen Druck und/oder Hitze unterhalb seiner Schmelztemperatur erfolgt.

9. Verfahren nach Anspruch 7 oder 8, **dadurch gekennzeichnet, dass** die Verfestigung des Schlingknotens (40) durch Aufschmelzen eines den Schlingknoten (40) mindestens teilweise bedeckenden Materials erfolgt.

10. Verfahren nach mindestens einem der Ansprüche 7 bis 9, **dadurch gekennzeichnet, dass** die Verfestigung des Schlingknotens (40) durch Applikation eines luft- und/oder UV-härtenden Klebers erfolgt.

11. Verfahren nach mindestens einem der Ansprüche 7 bis 10, **dadurch gekennzeichnet, dass** das den Schlingknoten (40) mindestens teilweise bedeckende Material aus einem oder mehreren Thermoplastfäden (35) besteht, die mit einem Laserschuss zum Schmelzen gebracht werden.

12. Verfahren nach mindestens einem der Ansprüche 1 bis 11, **dadurch gekennzeichnet, dass** die aus den Rovings (25) gebildeten Faserbündel aus alkali- und korrosionsresistenten Fasern aus Kunststoffen oder Biokunststoffen und/oder Naturfasern und/oder Glasfasern und/oder Kohlenstoff/Carbonfasern und/oder Aramid-Fasern und/oder insbesondere aus Basaltfasern bestehen bzw. aus nichtmetallischen biokompatiblen Materialien.

13. Verfahren nach mindestens einem der Ansprüche 1 bis 12, **dadurch gekennzeichnet, dass** die Fasern der Rovings (25) einen Durchmesser im Bereich von wenigen 6 Mikrometern bis über 50 Mikrometern aufweisen und ein beispielhaftes Bündel aus einigen 6.000 bis 96.000 Fasern besteht bzw. typisch 150 bis über 4800 tex (g/km) aufweist und in Form von Spulen (16) mit einem typischen Gewicht von 30 kg und beispielhaft einer Länge von über 10 km verwendet wird.

14. Verfahren nach mindestens einem der Ansprüche 1 bis 13, **dadurch gekennzeichnet, dass** die Fasern des Rovings (25) mit einer Grundschlichte aus wässrigem Harz beschichtet sind und diese im NIR-LEDs bzw. Laser im Bereich von 700 bis 1.200 nm eine gute Absorption aufweisen und derart mit punktueller oder flächig definierter NIR-Bestrahlung thermisch aktiviert werden und eine Erhöhung der Verbindung, an den Kreuzungspunkten (26) zwischen Roving (25) - Geogrid (13) und Befestigungsfaden (47) entsteht.

15. Verfahren nach mindestens einem der Ansprüche 1 bis 14, **dadurch gekennzeichnet, dass** das Geogrid (13) knotensteife bzw. knotenfeste und flexible Gitter von Rovings (25) auf Basis von Geokunststoffen bzw. Geotextilien aufweist und aus alkali- und korrosionsresistenten Fasern aus Kunststoffen und/oder Biokunststoffen und/oder Naturfasern und/oder Glasfasern und/oder Kohlenstoff/Carbonfasern und/oder Aramid-Fasern und/oder insbesondere aus Basaltfasern bzw. aus nichtmetallischen biokompatiblen Materialien besteht.

16. Verfahren nach mindestens einem der Ansprüche 1 bis 15, **dadurch gekennzeichnet, dass** die Ketten-Stich-Stick- bzw. Legemaschine (49) eine NC-gesteuerte Anlage ist, die präzise und automatisierte Ablegeprozesse auf einem Geogrid (13) ausführt, das in einem oder mehreren Spannrahmen (12) straff gehalten wird und derart ein Legen/Aufbringen von Faserbündeln (25), zum Teil ohne feste Verbindung, dem Lastpfad folgend, auf dem Geogrid (13) ermöglicht.

17. Verfahren nach mindestens einem der Ansprüche 1 bis 16, **dadurch gekennzeichnet, dass** die Steuerung der Nadelbewegung der Ketten-Stich-Stick- bzw. Legemaschine (49) entsprechend lastfachgerecht vorgegebener Geometrien mittels Computern erfolgt und durch optoelektronische Positionier- bzw. Kalibrier- bzw. Optimier-Methoden in der Präzision ergänzbar sind und allenfalls auf geometrische Abweichungen der verwendeten Geogrids angepasst werden und derart allfällige Toleranzen ausgeglichen werden.

18. Verfahren nach mindestens einem der Ansprüche 1 bis 17, **dadurch gekennzeichnet, dass** die Ketten-Stich-Stick- bzw. Legemaschine (49) einen typischen Legebereich von 2m x 1m aufweist und durch Anordnung mehrerer Einheiten (49) nebeneinander auf mehrere Meter bis etwa 8m x 2m Meter erweiterbar sind und jeweils die Spannrahmen (12) zur straffen Halterung der Geogrid (13) für derart lange Gebilde angeordnet werden.

19. Bewehrung auf Basis eines Geogrids (13) enthaltend Faserbündel (25) hergestellt nach mindestens einem der Ansprüche 1 bis 18.

20. Anwendung einer Bewehrung nach Anspruch 19 zur Herstellung eines faserverstärkten Beton-Objektes mit erhöhter Zugfestigkeit, erhöhter Korrosionsbeständigkeit, geringerem Gewicht, höherer Temperaturbeständigkeit und mit der Möglichkeit der räumlichen Gestaltung (3D Objekten) unter vorzugsweiser Verwendung von Basaltfasern.

21. Vorrichtung zur Herstellung einer textilen Bewehrung für Betonbauteile, wobei eine Legemaschine (49) in mindestens zwei Raumachsen gesteuert über einem flächigen Trägermaterial angeordnet ist, das in einem mindestens in einer Raumebene bewegbar gesteuerten Spannrahmen (12) befestigt ist, und aus Faserbündeln bestehende Rovings (25) auf dem flächigen Trägermaterial mittels eines textilen Befestigungsfadens (47) mit Befestigungsknoten festlegbar sind, **dadurch gekennzeichnet, dass** das Trägermaterial als offen-maschiges aus sich kreuzenden Gitterstäben (27) bestehendes Geogrid (13) ausgebildet ist und dass die Rovings (25) mit einem Schlingknoten (40) des Befestigungsfadens (47) auf den Gitterkreuzungspunkten (26) des Geogrid (13) festgelegt werden.

22. Vorrichtung nach Anspruch 20, **dadurch gekennzeichnet, dass** an der Legemaschine (49) ein in mindestens zwei Raumachsen bewegbar gesteuerter Stickwerkzeugkopf (28) angeordnet ist, der eine Sticknadel (29) trägt, welche zur Anfertigung eines Schlingknotens (40) geeignet ist.

23. Vorrichtung nach einem der Ansprüche 21 oder 22, **dadurch gekennzeichnet, dass** an einem mindestens in zwei Raumachsen bewegbar gesteuerten Legekopf (5) ein Stickwerkzeugkopf (28) angeordnet ist, an dem eine den Befestigungsfaden (47) verarbeitende Sticknadel (29) angeordnet ist.

24. Vorrichtung nach mindestens einem der Ansprüche 21 bis 23, **dadurch gekennzeichnet, dass** am Legekopf (5) eine Zuführeinheit (21, 31, 32) für die Zuführung der Rovings (25) zum Gitterkreuzungspunkt (26) des Geogrids (13) angeordnet ist.

25. Vorrichtung nach Anspruch 24, **dadurch gekennzeichnet, dass** die Zuführeinheit (21, 31, 32) aus einer Führungsöse (32) besteht, durch welche der Roving (25) in eine gegen den Gitterkreuzungspunkt (26) gerichtete Zuführung (3) einführbar ist.

26. Vorrichtung nach mindestens einem der Ansprüche 21 bis 25, **dadurch gekennzeichnet, dass** am Legekopf (5) eine zusätzliche Zuführung (4) eines oder mehrerer Thermoplastfäden (35) zum Roving (25) angeordnet ist.

27. Vorrichtung nach Anspruch 26, **dadurch gekennzeichnet, dass** die zusätzliche Zuführung von einem oder mehreren Thermoplastfäden (35) zum Roving (25) aus am Außenumfang der größeren Führungsöse (32) angeordneten kleineren Führungsösen (33) besteht, durch welche jeweils mindestens ein Thermoplastfaden (35) in einen Mischkopf (36) einführbar ist, der koaxial und stromauf der Auslaßmündung (37) der Zuführeinheit (21, 31, 32) angeordnet ist.

28. Vorrichtung nach mindestens einem der Ansprüche 21 bis 27, **dadurch gekennzeichnet, dass** am Legekopf (5) ein Laserkopf (1) befestigt ist, der auf den Schlingknoten (40) im Gitterkreuzungspunkt (26) des Geogrids (13) gerichtet ist.

29. Vorrichtung nach mindestens einem der Ansprüche 21 bis 28, **dadurch gekennzeichnet, dass** ein flächiges mit Rovings (25) belegtes Armierungsgitter mit einer Umform- oder Biegeeinheit in einen räumlichen Armierungskorb (50) umformbar ist.

30. Vorrichtung nach mindestens einem der Ansprüche 1 bis 29, **dadurch gekennzeichnet, dass** sie zur Ausführung des Verfahrens nach mindestens einem der Ansprüche 1 bis 20 geeignet ist.

## Geänderte Patentansprüche

### Geänderte Patentansprüche gemäss Regel 137(2) EPÜ.

1. Verfahren zur Herstellung einer textilen Bewehrung für Betonbauteile, wobei in einem ersten Verfahrensschritt ein flächiges Trägermaterial bereitgestellt wird, das in einem zweiten Verfahrensschritt mit Rovings (25) belegt wird, die in einem dritten Verfahrensschritt unter Verwendung eines Befestigungsfadens (47) mit einem textilen Knoten (40, 44) auf dem Trägermaterial (13) festgelegt werden,
wobei
das Trägermaterial als offen-maschiges aus sich kreuzenden Gitterstäben (27) bestehendes Geogrid (13) ausgebildet ist, **dadurch gekennzeichnet, dass** im dritten Verfahrensschritt die Rovings (25) einzeln auf dem Geogrid abgelegt (13) werden, und dass jedes dieser einzelnen Rovings (25) durch mindestens einen Schlingknoten (40) des Befestigungsfadens (47) auf den Gitterkreuzungspunkten (26) des Geogrid (13) festgelegt wird.

2. Verfahren nach Anspruch 1, **dadurch gekennzeichnet, dass** das Geogrid (13) in einem mindestens in einer horizontalen Richtung bewegbar angetriebenen Spannrahmen (12) einer Kettenstich-Stick- bzw. Legemaschine (49) gehalten wird.

3. Verfahren nach Anspruch 1 oder 2, **dadurch gekennzeichnet, dass** die aus den Rovings (25) gebildeten Faserbündel lastfachgerecht auf das straff gespannte Geogrid (13) mittels Ketten-Stich-Stickverfahren gestickt werden.

4. Verfahren nach mindestens einem der Ansprüche 1 bis 3, **dadurch gekennzeichnet, dass** der Spannrahmen (12) mindestens in X-Y-Richtung (23, 48) bewegbar angetrieben ist.

5. Verfahren nach mindestens einem der Ansprüche 1 bis 4, **dadurch gekennzeichnet, dass** die Legemaschine (49) mindestens in Z-Richtung bewegbar über dem Spannrahmen (12) gesteuert angetrieben ist.

6. Verfahren nach mindestens einem der Ansprüche 1 bis 5, **dadurch gekennzeichnet, dass** der Schlingknoten (40) als Kettstich-Schlaufe (44) ausgebildet ist und mit dem hakenförmigen Ende einer in mindestens zwei Raumachsen bewegbar angetriebenen Sticknadel (29, 30) hergestellt wird.

7. Verfahren nach mindestens einem der Ansprüche 1 bis 6, **dadurch gekennzeichnet, dass** der fertig gestellte Schlingknoten (40) bei oder nach dessen Herstellung mechanisch und/oder thermisch verfestigt wird.

8. Verfahren nach Anspruch 7, **dadurch gekennzeichnet, dass** die Verfestigung des Schlingknotens (40) durch mechanischen Druck und/oder Hitze unterhalb seiner Schmelztemperatur erfolgt.

9. Verfahren nach Anspruch 7 oder 8, **dadurch gekennzeichnet, dass** die Verfestigung des Schlingknotens (40) durch Aufschmelzen eines den Schlingknoten (40) mindestens teilweise bedeckenden Materials erfolgt.

10. Verfahren nach mindestens einem der Ansprüche 7 bis 9, **dadurch gekennzeichnet, dass** die Verfestigung des Schlingknotens (40) durch Applikation eines luft- und/oder UV-härtenden Klebers erfolgt.

11. Verfahren nach mindestens einem der Ansprüche 7 bis 10, **dadurch gekennzeichnet, dass** das ein den Schlingknoten (40) mindestens teilweise bedeckende Material aus einem oder mehreren Thermoplastfäden (35) besteht, die mit einem Laserschuss zum Schmelzen gebracht werden.

12. Verfahren nach mindestens einem der Ansprüche 1 bis 11, **dadurch gekennzeichnet, dass** die aus den Rovings (25) gebildeten Faserbündel aus alkali- und korrosionsresistenten Fasern aus Kunststoffen oder Biokunststoffen und/oder Naturfasern und/oder Glasfasern und/oder Kohlenstoff/Carbonfasern und/oder Aramid-Fasern und/oder insbesondere aus Basaltfasern bestehen bzw. aus nichtmetallischen biokompatiblen Materialien.

13. Verfahren nach mindestens einem der Ansprüche 1 bis 12, **dadurch gekennzeichnet, dass** die Fasern der Rovings (25) einen Durchmesser im Bereich von wenigen 6 Mikrometern bis über 50 Mikrometern aufweisen und ein beispielhaftes Bündel aus einigen 6.000 bis 96.000 Fasern besteht bzw. typisch 150 bis über 4800 tex (g/km) aufweist und in Form von Spulen (16) mit einem typischen Gewicht von 30 kg und beispielhaft einer Länge von über 10 km verwendet wird.

14. Verfahren nach mindestens einem der Ansprüche 1 bis 13, **dadurch gekennzeichnet, dass** die Fasern des Rovings (25) mit einer Grundschlichte aus wässrigem Harz beschichtet sind und diese im NIR-LEDs bzw. Laser im Bereich von 700 bis 1.200 nm eine gute Absorption aufweisen und derart mit punktueller oder flächig definierter NIR-Bestrahlung thermisch aktiviert werden und eine Erhöhung der Verbindung, an den Kreuzungspunkten (26) zwischen Roving (25) - Geogrid (13) und Befestigungsfaden (47) entsteht.

15. Verfahren nach mindestens einem der Ansprüche 1 bis 14, **dadurch gekennzeichnet, dass** das Geogrid (13) knotensteife bzw. knotenfeste und flexible Gitter von Rovings (25) auf Basis von Geokunststoffen bzw. Geotextilien aufweist und aus alkali- und korrosionsresistenten Fasern aus Kunststoffen und/oder Biokunststoffen und/oder Naturfasern und/oder Glasfasern und/oder Kohlenstoff/Carbonfasern und/oder Aramid-Fasern und/oder insbesondere aus Basaltfasern bzw. aus nichtmetallischen biokompatiblen Materialien besteht.

16. Verfahren nach mindestens einem der Ansprüche 1 bis 15, **dadurch gekennzeichnet, dass** die Ketten-Stich-Stick- bzw. Legemaschine (49) eine NCgesteuerte Anlage ist, die präzise und automatisierte Ablegeprozesse auf einem Geogrid (13) ausführt, das in einem oder mehreren Spannrahmen (12) straff gehalten wird und derart ein Legen/Aufbringen von Faserbündeln (25), zum Teil ohne feste Verbindung, dem Lastpfad folgend, auf dem Geogrid (13) ermöglicht.

17. Verfahren nach mindestens einem der Ansprüche 1 bis 16, **dadurch gekennzeichnet, dass** die Steuerung der Nadelbewegung der Ketten-Stich-Stick- bzw. Legemaschine (49) entsprechend lastfachgerecht vorgegebener Geometrien mittels Computern erfolgt und durch optoelektronische Positionier- bzw. Kalibrier- bzw. Optimier-Methoden in der Präzision ergänzbar sind und allenfalls auf geometrische Abweichungen der verwendeten Geogrids angepasst werden und derart allfällige Toleranzen ausgeglichen werden.

18. Verfahren nach mindestens einem der Ansprüche 1 bis 17, **dadurch gekennzeichnet, dass** die Ketten-Stich-Stick- bzw. Legemaschine (49) einen typischen Legebereich von 2m x 1m aufweist und durch Anordnung mehrerer Einheiten (49) nebeneinander auf mehrere Meter bis etwa 8m x 2m Meter erweiterbar sind und jeweils die Spannrahmen (12) zur straffen Halterung der Geogrid (13) für derart lange Gebilde angeordnet werden.

19. Bewehrung auf Basis eines Geogrids (13) enthaltend Faserbündel (25) hergestellt nach mindestens einem der Ansprüche 1 bis 18.

20. Anwendung einer Bewehrung nach Anspruch 19 zur Herstellung eines faserverstärkten Beton-Objektes mit erhöhter Zugfestigkeit, erhöhter Korrosionsbeständigkeit, geringerem Gewicht, höherer Temperaturbeständigkeit und mit der Möglichkeit der räumlichen Gestaltung (3D Objekten) unter vorzugsweiser Verwendung von Basaltfasern.

21. Vorrichtung zur Herstellung einer textilen Bewehrung für Betonbauteile, wobei eine Legemaschine (49) in mindestens zwei Raumachsen gesteuert über einem flächigen Trägermaterial angeordnet ist, das in einem mindestens in einer Raumebene bewegbar gesteuerten Spannrahmen (12) befestigt ist, und aus Faserbündeln bestehende Rovings (25) auf dem flächigen Trägermaterial mittels eines textilen Befestigungsfadens (47) mit Befestigungsknoten festlegbar sind, **dadurch gekennzeichnet, dass** das Trägermaterial als offen-maschiges aus sich kreuzenden Gitterstäben (27) bestehendes Geogrid (13) ausgebildet ist und dass jedes einzelne Roving (25) mittels mindestens eines Schlingknotens (40) des Befestigungsfadens (47) auf einem Gitterkreuzungspunkt (26) des Geogrid (13) festgelegt wird.

22. Vorrichtung nach Anspruch 20, **dadurch gekennzeichnet, dass** an der Legemaschine (49) ein in mindestens zwei Raumachsen bewegbar gesteuerter Stickwerkzeugkopf (28) angeordnet ist, der eine Sticknadel (29) trägt, welche zur Anfertigung eines Schlingknotens (40) geeignet ist.

23. Vorrichtung nach einem der Ansprüche 21 oder 22, **dadurch gekennzeichnet, dass** an einem mindestens in zwei Raumachsen bewegbar gesteuerten Legekopf (5) der Stickwerkzeugkopf (28) angeordnet ist, an dem eine den Befestigungsfaden (47) verarbeitende Sticknadel (29) angeordnet ist.

24. Vorrichtung nach mindestens einem der Ansprüche 21 bis 23, **dadurch gekennzeichnet, dass** am Legekopf (5) eine Zuführeinheit (21, 31, 32) für die Zuführung der Rovings (25) zum Gitterkreuzungspunkt (26) des Geogrids (13) angeordnet ist.

25. Vorrichtung nach Anspruch 24, **dadurch gekennzeichnet, dass** die Zuführeinheit (21, 31, 32) aus einer Führungsöse (32) besteht, durch welche der Roving (25) in eine gegen den Gitterkreuzungspunkt (26) gerichtete Zuführung (3) einführbar ist.

26. Vorrichtung nach mindestens einem der Ansprüche 23 bis 25, **dadurch gekennzeichnet, dass** am Legekopf (5) eine zusätzliche Zuführung (4) eines oder mehrerer Thermoplastfäden (35) zum Roving (25) angeordnet ist.

27. Vorrichtung nach Anspruch 26, **dadurch gekennzeichnet, dass** die zusätzliche Zuführung von einem oder mehreren Thermoplastfäden (35) zum Roving (25) aus am Außenumfang der Führungsöse (32) angeordneten weiteren kleineren Führungsösen (33) besteht, durch welche jeweils mindestens ein Thermoplastfaden (35) in einen Mischkopf (36) einführbar ist, der koaxial und stromauf der Auslaßmündung (37) der Zuführeinheit (21, 31, 32) angeordnet ist.

28. Vorrichtung nach mindestens einem der Ansprüche 23 bis 27, **dadurch gekennzeichnet, dass** am Legekopf (5) ein Laserkopf (1) befestigt ist, der auf den Schlingknoten (40) im Gitterkreuzungspunkt (26) des Geogrids (13) gerichtet ist.

29. Vorrichtung nach mindestens einem der Ansprüche 21 bis 28, **dadurch gekennzeichnet, dass** ein flächiges mit Rovings (25) belegtes Armierungsgitter mit einer nicht zur Vorrichtung gehörenden Umform- oder Biegeeinheit in einen räumlichen Armierungskorb (50) umformbar ist.

30. Vorrichtung nach mindestens einem der Ansprüche 1 bis 29, **dadurch gekennzeichnet, dass** sie zur Ausführung des Verfahrens nach mindestens einem der Ansprüche 1 bis 20 geeignet ist.
